# EUROPÄISCHE PATENTSCHRIFT

(11) **EP 0 781 583 B1**
(45) Veröffentlichungstag und Bekanntmachung des Hinweises auf die Patenterteilung: **23.07.2003**
(21) Anmeldenummer: 96810832.4
(22) Anmeldetag: 28.11.1996
(51) Int. Cl.: B01D 19/00

(54) **Verfahren und Apparateanordnung zur Aufwärmung und mehrstufigen Entgasung von Wasser**
Process and apparatus for heating and multiple degassing of water
Procédé et dispositif de chauffage et de déaération multiple de l'eau

(30) Priorität: 29.12.1995 DE 19549139
(43) Veröffentlichungstag der Anmeldung: 02.07.1997
(73) Patentinhaber: ALSTOM (Switzerland) Ltd, 5401 Baden (CH)
(72) Erfinder: Blangetti, Francisco, Dr., 5400 Baden (CH); Eberle, Hans, 5452 Oberrohrdorf (CH)

(56) Entgegenhaltungen:
- EP-A- 0 461 515
- EP-A- 0 561 012
- EP-A- 0 737 500
- US-A- 4 089 304

## Beschreibung

### TECHNISCHES GEBIET

Die Erfindung betrifft ein Verfahren zum Aufwärmen und mehrstufigen Entgasen von Zusatzwasser mittels Dampf in einer Stromerzeugungsanlage. Sie bezieht sich ebenfalls auf eine Apparateanordnung zur Durchführung des Verfahrens.

### STAND DER TECHNIK

Der konsumptive Verbrauch von entgastem demineralisiertem Wasser in Kombi- und Industriekraftwerksanlagen ist sehr gross. Das führt notwendigerweise zur Behandlung von beträchtlichen Mengen Zusatzwasser zwecks Reposition der Verluste.
Bekannt sind in diesem Zusammenhang besondere Kondensatorkonfigurationen mit Mischvorwärmern/Entgasern, die in der Lage sind, Zusatzwassermengen bis zu 70% der Abdampfmenge aufzuwärmen und zu entgasen. Normalerweise werden in klassischen Kondensationskraftwerksanlagen nicht mehr als 3 bis 5% Zusatzwasser, bezogen auf die Abdampfmenge, direkt in einen Kondensator eingespritzt. Massive Einspritzung von Wasser beeinträchtigt allerdings den Kondensatordruck, da die Kondensatorbündel mit Fremdwasser, also Wasser, das nicht von der Kondensation stammt, beaufschlagt wird. Das direkte Einsprühen von Zusatzwasser in den Kondensator würde aufgrund der genannten grossen Mengen zu einer Überflutung der Rohrbündel führen. Ein Vakuumverlust wäre unumgänglich, was eine erhebliche Beeinträchtigung der Kondensatorfunktion darstellt.

Eine wirtschaftliche Aufwärmung und Entgasung von grossen Zusatzwassermengen wird heute mit energetisch niederwertigstem Dampf durchgeführt, wobei-der Gesamtwirkungsgrad des Kraftwerkprozesses nur minimal beeinträchtigt wird. Um diese Aufgabe nach der herkömmlichen Praxis zu erfüllen, werden über dem Kondensator Packungssäulen installiert, in denen unter Verwendung des Turbinenabdampfes als Spülmittel, die Austreibung der im Zusatzwasser gelösten Gase erfolgt. Dabei wird der erforderliche Kondensatordruck unter Zuhilfenahme eines zusätzlichen Saugeraggregates aufrechterhalten.

Beim Eintritt des zumeist einrieselnden Zusatzwassers in eine im Gegenstrom betriebene Packungssäule, weist dieses Zusatzwasser in der Regel gegenüber dem Spüldampf eine Unterkühlung von 10°C bis 18°C auf. Für eine ideale Entgasung in einer Packungssäule ist aber annähernd ein thermisches Gleichgewicht zwischen der flüssigen Phase und der Gasphase eine notwendige Bedingung. Wegen der aufgezeigten Unterkühlung muss also zunächst der Abdampf die thermische Sättigung des Zusatzwassers vollziehen. Wenn das Aufwärmen ebenfalls wie das Entgasen in einer Packungssäule erfolgen soll, muss wegen der möglichen Überflutungsgefahr der Säulenquerschnitt einer solchen Packung überdimensional ausgelegt werden. Die Auslegung einer Packungssäule für die genannte Belastung ist aber mit grossen Kosten verbunden.
Der bei der Aufwärmung des herabfliessenden Wassers unwirksam durch eine derartige Packungssäule getriebene Dampf, geht unweigerlich dem Wasser-Dampfkreislauf verloren, da eine effiziente Entgasung, wie erwähnt, erst nach einer Temperaturannäherung des Zusatzwassers an den Spüldampf kleiner 1 K erfolgt. Desweiteren ist die Installation eines weiteren Saugeraggregates in einem Wasser-Dampfkreislauf notwendig, wenn die Packungssäule auch für das Erwärmen des Zusatzwassers eingesetzt wird.

Eine wirksame Entgasung wird charakterisiert durch eine Entgasungsspanne an O₂ von 10000 ppb (Teile pro Milliarde), dies ist der Sättigungszustand des Wassers mit atmosphärischer Luft und bei Raumtemperatur, herunter auf einstellige ppb - Werte, wie etwa 5 ppb.

### DARSTELLUNG DER ERFINDUNG

Es ist daher die Aufgabe der Erfindung, ein Verfahren und eine zur Durchführung des Verfahrens zugehörige Apparateanordnung der eingangs genannten Art dahingehend weiterzuentwickeln, das energetisch die Aufwärmung und Entgasung des Zusatzwassers mittels Abdampf verbessert und damit preiswerter wird. Gleichzeitig wird die Reduktion des Spüldampfverlustes durch Absaugung während der Aufwärmung und Entgasung angestrebt.

Erfindungsgemäss wird diese Aufgabe durch die Merkmale der Ansprüche 1 und 2 gelöst.

Der Kern der Erfindung liegt also darin, das Erwärmen und Entgasen von grossen Mengen Zusatzwasser mittels niederwertigem Dampf getrennt durchzuführen, da ein Entgasen ausschliesslich in thermisch gesättigtem Zustand des Zusatzwassers, also bei annähernd gleicher Temperatur des Zusatzwasser und des Abdampfes, energetisch und wirtschaftlich sinnvoll ist.

Eine erste bevorzugte Ausführungsform der Erfindung zeichnet sich dadurch aus, dass zunächst ausschliesslich die thermische Sättigung des Zusatzwassers annähernd vollständig in Hintereinanderschaltung eines Fallfilmwärmeübertragers und eines Mantelspaltwärmeübertragers durchgeführt wird, bevor die Entgasung in einer Packungssäule erfolgt. Das Überfluten einer Packungssäule wird durch das in ihr stattfindende Aufeinandertreffen des Spüldampfes und des gleichtemperierten Zusatzwassers selbst bei vergleichsweise kleinem Säulenquerschnitt ausgeschlossen.
Diese Ausführungsform eignet sich besonders für einen Umbau einer bestehenden Kraftwerksanlage auf einen neuen Standard.

Bei einer zweiten Ausführungsform der Erfindung erfolgt die wesentliche Erwärmung des Zusatzwassers in einem zusätzlichen Rohrbündel eines Kondensators, und anschliessend wird die Entgasung ausschliesslich in einer Packungssäule oder einem Fallfilmentgaser durchgeführt. Diese Ausführungsvariante eignet sich besonders für den Einsatz in einer Neuanlage.

Das neue Verfahren und die neue Apparateanordnung zeichnen sich dadurch aus, dass im Vergleich zu herkömmlichen Methoden und Schaltungen der Gesamtwirkungsgrad der Kraftwerksanlage gesteigert wird, da niederwertiger Abdampf zum Aufwärmen und Entgasen verwendet wird, der dabei vollständig kondensiert wird und dem Kreislauf erhalten bleibt, wobei gleichzeitig der Kondensator entlastet wird.

### KURZE BESCHREIBUNG DER ZEICHNUNG

In der Zeichnung sind zwei Ausführungsbeispiele der Erfindung anhand einer Vorwärmer-/Entgaserstrasse für Zusatzwasser in einer Kraftwerksanlage schematisch dargestellt.
Es zeigen:
- Fig. 1: einen Teillängsschnitt durch einen Kondensator mit einem nachgeschaltetem Fallfilmwärmeübertrager, einem Mantelspaltwärmeübertrager mit einer Packungssäule und einer Kondensator-Stripper-Einheit;
- Fig. 2: eine Ausführungsvariante der Erfindung.

Es sind nur die für das Verständnis der Erfindung wesentlichen Elemente gezeigt. Strömungsrichtungen der Arbeitsmittel sind mit Pfeilen dargestellt.

### WEG ZUR AUSFÜHRUNG DER ERFINDUNG

In Kraftwerksanlagen mit Wärmeauskopplung oder Dampfverbrauchern, wie beispielsweise Brennersysteme mit Dampfeinspritzung zur Schadstoffreduktion oder Leistungserhöhung, können bis zu 100% bezogen auf die Abdampfmenge an Wasser im Wasser-Dampfkreislauf verbraucht werden. Dementsprechend muss kontinuierlich dem Wasser-Dampfkreislauf Zusatzwasser hinzugefügt werden, das allerdings zuvor den Stoffeigenschaften des Kondensats in einem Kondensator angepasst werden muss. Die beiden hier erörterten Kriterien sind zum einen der Anteil der im Zusatzwasser gelösten Inertgase und zum anderen die Temperatur. Charakteristisch für die im Zusatzwasser gelöste Inertgasmenge ist die Anfangskonzentration an O₂ von 10000 ppb (Teile pro Milliarde) unter Raumbedingungen. Dieser Konzentrationswert muss vor dem Eintritt des Zusatzwassers in den Wasser-Dampfkreislauf einer Kraftwerksanlage bis auf einen einstelligen ppb-Wert gesenkt werden.

Die Entgasung erfolgt zweistufig, und beginnt mit der Entspannungsentgasung unmittelbar nach dem Einsprühen des Zusatzwassers in einen Vakuumraum. Das hier auftretende, explosionsartige Austreiben von Inertgasanteilen lässt sich beschreibend mit "Champagner-Effekt" charakterisieren. Wärmetechnisch optimal wird anschliessend in einer zweiten Phase die Entgasung von Zusatzwasser in gesättigtem Zustand rein stoffkinetisch durchgeführt. Das bedeutet, Spüldampf und Zusatzwasser mit gleicher Temperatur werden in einem Gas-Flüssigkeitskontaktapparat derart zueinandergeführt, dass durch diffusen Transport über die Gas/Flüssigkeitsgrenzschicht die gelösten Gase ausgetrieben werden. Hieraus lässt sich ableiten, dass die beiden Prozesse Erwärmung und Entgasung des Zusatzwassers dann energetisch und damit auch wirtschaftlich optimiert ablaufen, wenn sie getrennt voneinander durchgeführt werden. Der Verfahrensablauf der Zusatzwasserbehandlung beginnt also mit dem Erwärmen, bis annähernd die Sättigungsbedingungen angenommen worden sind, und endet mit dem Entgasen auf rein stoffkinetischer Basis vor dem Vermischen des behandelten Wassers mit dem Kondensatorkondensat.

Da die beiden Prozesse Erwärmen und Entgasen von grossen Mengen Zusatzwasser weitgehend isoliert und nacheinander ablaufen, wird die Beschreibung anhand der Zeichnung ähnlich strukturiert.

### Erwärmen des Zusatzwassers

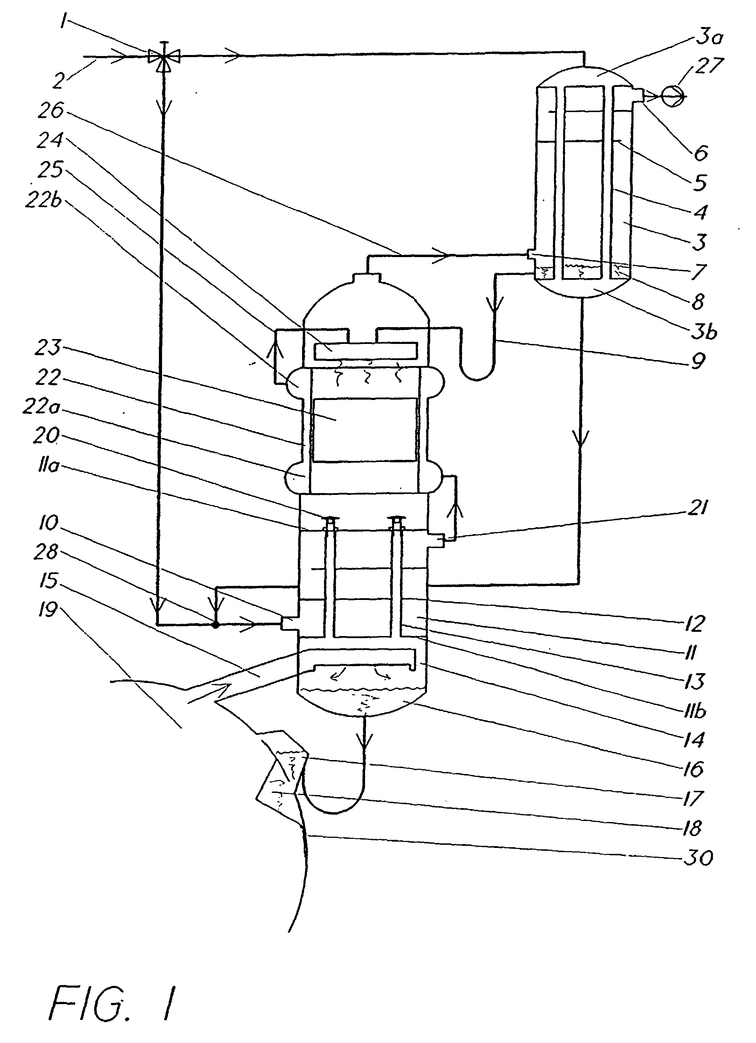

Das Erwärmen des Zusatzwassers, mit einer Unterkühlung von 18 K und mehr, erfolgt im wesentlichen in drei Stufen. Wie in Fig. 1 dargestellt, wird das Zusatzwasser über eine Zuleitung 2 zu einem 3-Wege-Ventil 1 geführ und dort zunächst in einen kleineren und einen grösseren Teilstrom aufgeteilt. Der grössere Teilstrom des Zusatzwassers umfasst etwa 90% der Gesamtströmung und der kleinere Anteil dementsprechend etwa 10%.

Der kleinere Teilstrom wird einem senkrecht angeordneten Kondensator-Stripper 3 zugeführt, der zwei voneinander getrennte Raumbereiche aufweist. Der eine Raumbereich umfasst zwei, den Kondensator-Stripper oben und unten begrenzende und in sich verschlossene Dome 3a, 3b, die über eine senkrechte Berohrung 4 miteinander verbunden sind. Der zweite Raumbereich befindet sich zwischen den abgeschlossenen Domen 3a und 3b und wird begrenzt von der Apparateinnenwand des Kondensator-Strippers 3. Der kleinere Teilstrom wird in den oberen Dom 3a eingeführt und fliesst in der senkrecht angeordneten Berohrung 4 zum unteren Dom 3b. Mantelseitig wird die Berohrung 4 mit Spüldampf in entgegengesetzter Strömungsrichtung zum inwändig fliessenden Zusatzwasser beaufschlagt. Der Spüldampf ist hier mit Inertgasen des Zusatzwassers angereichert. Er strömt durch einen Dampfeinlassstutzen 7 oberhalb des unteren Doms 3b in den Kondensator-Stripper 3 und wird durch ein Saugeraggregat 27 getrieben, welches unterhalb des oberen Doms 3a an einen dort angeordneten Absaugstutzen 6 angeschlossen ist.

Durch die Unterkühlung des Zusatzwassers in der Berohrung 4 wird der Spüldampf nahezu vollständig kondensiert und von den Inertgasen separiert. Dieser Vorgang wird verstärkt durch eine Schikanierung 5 im oberen Bereich des Kondensator-Strippers 3, das heisst, in der Nähe des oberen Doms 3a. Nach dieser Phasentrennung sammelt sich der vollständig kondensierte Spüldampf als Kondensat 8 oberhalb des Doms 3b und die Inertgase mit einem geringen Restdampfanteil werden durch das Saugeraggregat 27 aus dem System entfernt. Durch diese nahezu vollständige Kondensation bleibt vorteilhafterweise der Spüldampf dem Wasser-Dampfkreislauf erhalten, das Zusatzwasser in der Berohrung 4 wird erwärmt, und das Saugeraggregat 27 bleibt praktisch unbeaufschlagt von dem Dampfvolumenstrom.

Der vorgewärmte kleinere Teilstrom des Zusatzwassers wird nun dem grösseren Teilstrom an einem Mischpunkt 28 wieder zugeführt. Das gesamte Zusatzwasser strömt anschliessend durch einen Einlasstutzen 10 in einen ebenfalls senkrecht angeordneten Apparat, der über seine senkrechte Längsausdehnung drei Bereiche aufweist. Der untere Teil ist als eine Dampfeinströmkammer 14 ausgebildet, die nach unten mit einem Dom abschliesst. Der Dom fungiert hier als ein Sammelgefäss 16 für erwärmtes und entgastes Zusatzwasser. Oberhalb der Dampfeinströmkammer 14 schliesst sich ein Rohrfallfilmwärmeübertrager 11 an, der durch zwei Abschlussböden 11a, 11b und die Apparatewand begrenzt wird, und eine senkrecht angeordnete Berohrung 13 zwischen den Abschlussböden 11a, 11b aufweist. Diese Berohrung 13 verbindet die untere Dampfeinströmkammer 14 mit einer oberhalb des Rohrfallfilmwärmeübertragers 11 angeordnete Packungssäule 23, die von einem Mantelfilmwärmeübertrager 22 umgeben ist.

Wie bereits erwähnt, strömt also der vom Teilstrom vorgewärmte Gesamtstrom des Zusatzwassers durch den Einlasstutzen 10 mantelseitig der Berohrung 13 in den Rohrfallfilmwärmeübertrager 11. Das Zusatzwasser strömt von dem am unteren

Ende des Rohrfallfilmübertragers 11 angeordneten Einlasstutzen 10 zu dem Auslasstutzen 21 am oberen Ende. Der senkrecht nach oben verlaufenden Strömungssweg des Zusatzwassers wird durch horizontal im Rohrfallfilmwärmeübertrager 11 angeordnete Schikanen 12 verlängert. Damit verlängert sich ebenfalls die Verweilzeit zum Erwärmen des Zusatzwassers in dem Rohrfallfilmwärmeübertrager 11. Die Erwärmung erfolgt mittels niederwertigem Abdampf, der über eine horizontale Dampfleitung 15 aus einem Kondensator 19 der Dampfeinströmkammer 14 zugeführt wird. Der Dampf wird durch die Berohrung 13 nach oben geführt und erwärmt dabei einen herabfallenden Wasserfilm des Rohrfallfilmwärmeübertragers 11. Dieser Wasserfilm überträgt dann seinen Wärmeinhalt teilweise über die Rohrwände der Berohrung 13 weiter an das mantelseitig fliessende Zusatzwasser.

Die letzte Erwärmungsstufe für Zusatzwassers findet in dem bereits erwähnten Mantelfilmwärmeübertrager 22 statt, der oberhalb des Rohrfallfilmwärmeübertragers 11 angeschlossen ist. Hierfür strömt das Zusatzwasser aus dem Auslasstutzen 21 durch eine Leitung zunächst in einen zum Mantelfilmwärmeübertrager 22 gehörigen unteren Sammelringkanal 22a. Von dort aus wird das Zusatzwasser durch einen Spalt von 4 bis 7 mm bis zu einem oberen Sammelringkanal 22b getrieben, wobei eine Wärmeübertragung von der ummantelten Packungssäule 23 zum Mantelfilmwärmeübertrager 22 erfolgt. Mit dieser Stufe wird die Erwärmung des Zusatzwasser abgeschlossen. Ausgangsseitig weist das Zusatzwasser nun annähernd Sättigungszustand auf, d.h. das Temperaturdelta zwischen dem Abdampf aus dem Kondensator und dem erwärmten Zusatzwasser beträgt unter Berücksichtigung der dampfseitigen Druckverluste nur noch etwa 0,5 K.

### Entgasen des erwärmten Zusatzwassers

Das Entgasen des erwärmten Zusatzwasser beginnt damit, dass das Zusatzwasser mittels einer Sprühvorrichtung 24, die mit dem oberen Sammelringkanal 22b verbunden ist, oberhalb der Packungssäule 23 eingesprüht wird und dabei mittels spontaner Entspannung entgast wird. Zugleich wird über einen Kondensatablauf 9 Kondensat 8 aus dem Kondensator-Stripper 3 über die Sprühvorrichtung eingesprüht. Im Gegenstromprinzip begegnen sich in der Packungssäule 23 das von oben rieselnde Zusatzwasser und der von unten strömende Abdampf. Hierdurch wird die stoffkinetische Entgasung eingeleitet und aufrechterhalten. Der Sättigungszustand des Zusatzwassers ermöglicht das leichte Austreiben der gelösten Inertgase, wie eingangs bereits erörtert wurde. Da die Packungssäule hier ausschliesslich gemäss ihrer Funktion als Entgaser verwendet wird, ist ihr Durchmesser und ihr Packungsvolumen vergleichsweise deutlich kleiner zu dimensionieren, als in Apparaten, in denen die Packungssäule sowohl erwärmen wie auch entgasen soll. Bezüglich des Volumens ist die hier verwendete Packungssäule etwa 75% kleiner als eine Packungssäule für eine erzwungene Doppelfunktion. Eine derart kleinere Packungssäule ist natürlich entsprechend preiswerter, wobei die Gefahr einer Überflutung, wie sie bei Beaufschlagung von Packungssäulen mit unterkühltem Zusatzwasser auftreten kann, völlig ausgeschlossen wird.

Das aus der Packungssäule rieselnde und hier teilentgaste Zusatzwasser wird nun mittels einer Filmabgabevorrichtung 20 über einen Rohrfallfilm in der Berohrung 13 wieder mittels Dampf erwärmt, da es in der Packungssäule 23 Wärmeenergie abgegeben hat. Für eine weitere Entgasung wird zunächst das im Rohrfallfilm erwärmte Zusatzwasser im Dom der Dampfeinströmkammer 14 gesammelt. Von dort aus wird das Zusatzwasser einer Wanne 17 an einer Kondensatorwand zugeführt, die das Zusatzwasser anschliessend mittels einer Filmabgabevorrichtung 18 entlang eines Wandfallfilms dem Kondensatorkondensat zugeführt. Durch diese Massnahme erfolgt die abschliessende Entgasung des Zusatzwassers, das nun eine charakteristische O₂-Konzentration von etwa 5 ppb aufweist, wobei zu berücksichtigen ist, dass sämtliche weiteren gelösten Gase, wie N₂, CO₂, etc., ebenfalls ausgetrieben wurden.

Der aus dem Kondensator stammende und zum Erwärmen und Entgasen verwendete Abdampf führt oberhalb der Sprühvorrichtung 24 alle ausgetriebenen Gase mit sich durch eine Dampfleitung in den Kondensator-Stripper. Wie bereits erläutert, erfolgt hier eine Separierung der ausgetriebenen Gase und des Spüldampfes durch eine Kondensation, die gleichzeitig zum Erwärmen von unterkühltem Zusatzwasser genutzt wird.

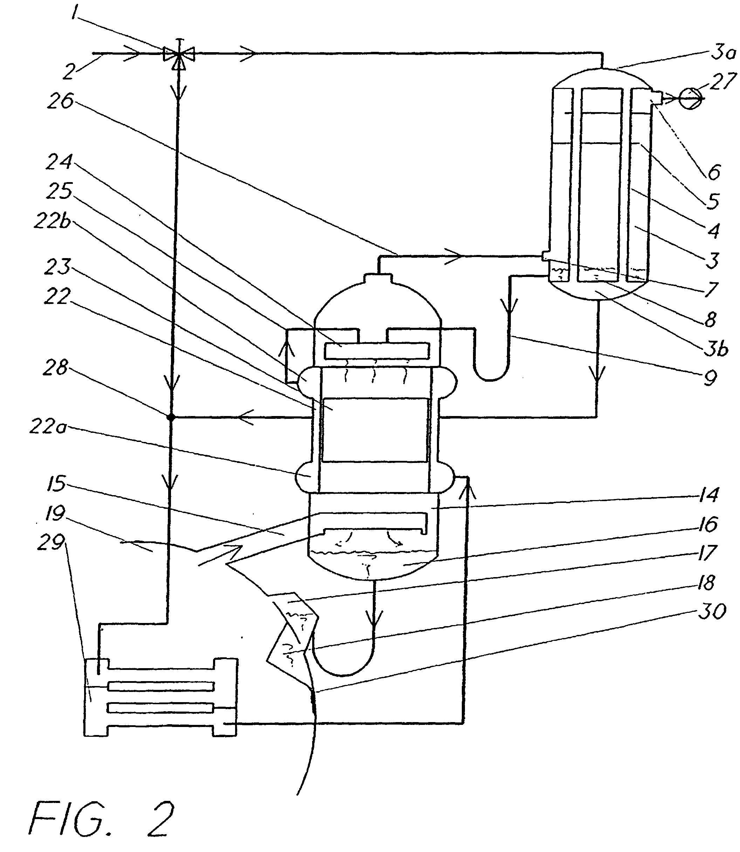

Eine zweite erfindungsgemässe Ausführung zeigt Fig. 2. Wesentlicher Unterschied im Vergleich zur ersten Ausführungsform, ist das Verfahren zum Erwärmen. Das Erwärmen des Zusatzwassers wird hier massgeblich in einem zusätzlichen Rohrbündel 29 des Kondensators 19 durchgeführt, womit der Rohrfallfilmwärmeübertrager 11 ersetzt wird. Dieses Rohrbündel 29 lässt sich hier als integrierten Bestandteil der Kondensatorberohrung ausführen. Das in einem Kondensator 19 verwendete Kühlwasser weist abströmseitig in der Regel eine Grädigkeit von 2 bis 3 K bezüglich der Abdampftemperatur auf. Da das dem zusätzlichen Rohrbündel 29 zugeführte Zusatzwasser 2 bis 3 K wärmer als Kühlwasser ist, weist dieses Zusatzwasser abströmseitig annähernd die gewünschte Sättigung auf.

Die Aufwärmung gemäss diesem zweiten Ausführungsbeispiels ist allerdings vorzugsweise nur bei der Projektierung einer Neuanlage anwendbar, wohingegen das erste Ausführungsbeispiel nach Fig. 1 auch in bestehenden Kraftwerksanlagen zur Anwendung kommen kann.

Ein entscheidender Vorteil der erfindungsgemässen Ausführungen ist, dass trotz der grossen Zusatzwassermenge durch optimierte Nutzung der Erwärmungs- und Entgasungsmassnahmen und unter Kombination geeigneter Apparate nur ein Saugeraggregat 27 für die Bereitstellung des geforderten treibenden Potentials benötigt wird.

Selbstverständlich ist die Erfindung nicht auf das gezeigte und beschriebene Ausführungsbeispiel beschränkt. Erfindungsgemäss denkbar ist beispielsweise ebenfalls eine Kombination der Erwärmung mittels Rohrbündel 29 und Rohrfallfilmwärmeübertrager 11. Auch eine Substitution der Packungssäule in Fig. 2 durch einen Fallfilmentgaser wäre eine erfindungsgemässe Variante.

### BEZUGSZEICHENLISTE

- 1: 3-Wege-Ventil
- 2: Zuleitung
- 3: Kondensator-Stripper
- 3a,b: Dom
- 4: Berohrung
- 5: Schikane
- 6: Absaugstutzen
- 7: Dampfeinlasstutzen
- 8: Kondensat
- 9: Kondensatablauf
- 10: Einlasstutzen
- 11: Rohrfallfilmwärmeübertrager
- 11a: Abschlussboden
- 11b: Abschlussboden
- 12: Schikane
- 13: Berohrung
- 14: Dampfeinströmkammer
- 15: Dampfzuleitung
- 16: Sammelgefäss
- 17: Wanne
- 18: Filmabgabevorrichtung
- 19: Kondensator
- 20: Filmabgabevorrichtung
- 21: Auslasstutzen
- 22: Mantelfilmwärmeübertrager
- 22a: Sammelringkanal
- 22b: Sammelringkanal
- 23: Packungssäule
- 24: Sprühvorrichtung
- 25: Rohr
- 26: Dampfleitung
- 27: Saugeraggregat
- 28: Mischpunkt
- 29: Rohrbündel
- 30: Wandfallfilm

## Patentansprüche

1. Verfahren zum Aufwärmen und Entgasen von Zusatzwasser mittels niederwertigem Abdampf aus einem Kondensator in einer Stromerzeugungsanlage,
**dadurch gekennzeichnet, dass**
der Zusatzwasserstrom in einen ersten grösseren Teilstrom und einen zweiten Teilstrom aufgeteilt wird,
dass der zweite kleinere Teilstrom konvektiv vorgewärmt wird, mit dem ersten grösseren Teilstrom zusammengeführt wird und ein Gesamtstrom von Zusatzwassers gebildet wird, der konvektiv auf Sättigungstemperatur erwärmt wird,
und anschliessend das auf Sättigungstemperatur erwärmte Zusatzwasser mit dem niederwertigen Abdampf entgast wird,
wobei die Entgasung in einem Vakuumraum erfolgt und die Temperatur des Zusatzwassers annähernd gleich der Temperatur des Abdampfes ist,
und der zum Erwärmen und Entgasen benutzte niederwertige Abdampf gleichzeitig mit der konvektiven Vorwärmung des zweiten kleineren Teilstroms nahezu vollständig kondensiert und dem Dampfkreislauf zurückgeführt wird.

2. Apparateanordnung zum Aufwärmen und Entgasen von Zusatzwasser mittels niederwertigem Abdampf in einer Stromerzeugungsanlage zur Durchführung des Verfahrens nach Anspruch 1;
**dadurch gekennzeichnet, dass**
die Apparateanordnung zum Erwärmen des Zusatzwassers mindestens zwei Apparate aufweist, die nach dem Prinzip der konvektiven Wärmeübertragung funktionieren, dass die Apparateanordnung zur Entgasung des Zusatzwassers mindestens eine Packungssäule (23) oder einen Fallfilmentgaser aufweist,
und zur nahezu vollständigen Kondensation des niederwertigen Abdampfes, der zur Erwärmung und Entgasung des Zusatzwassers verwendet wurde, ein Kondensator-Stripper (3) aufweist.

3. Apparateanordnung nach Anspruch 2,
**dadurch gekennzeichnet, dass**
die Apparate zum Erwärmen des Zusatzwassers einen Fallfilmwärmeübertrager (11), einen Mantelspaltwärmeübertrager (22) und für einen Teilstrom des Zusatzwassers einen Kondensator-Stripper (3) umfassen,
und die Apparate zum Entgasen des Zusatzwassers eine Packungssäule (23) oder einen Fallfilmentgaser und einen Wandfallfilmentgaser (30) umfassen, wobei der Wandfallfilmentgaser (30) hinter der Packungssäule (23) oder dem Fallfilmentgaser geschaltet ist.

4. Apparateanordnung nach Anspruch 3,
**dadurch gekennzeichnet, dass**
der Fallfilmwärmeübertrager (11) gegen die Strömungsrichtung des Zusatzwassers Schikanen (12) aufweist,
dass die Packungssäule (23) von dem Manteispaltwärmeübertrager (22) umgeben ist, und
dass der Kondensator-Stripper (3) gegen die Strömungsrichtung des Abdampfes Schikanen (5) aufweist.

5. Apparateanordnung nach Anspruch 2,
**dadurch gekennzeichnet, dass**
die Apparate zum Erwärmen des Zusatzwassers einen Kondensator-Stripper (3),
einen Mantelfilmwärmeübertrager (22) und einen Kondensator (19) umfassen, in welchem das Zusatzwasser durch ein separat angeordnetes Rohrbündel (29) geführt werden,
und die Apparate zum Entgasen des Zusatzwassers eine Packungssäule (23) oder einen Fallfilmentgaser und einen Wandfallfilmentgaser (30) umfassen, wobei der Wandfallfilmentgaser (30) hinter der Packungssäule (23) oder dem Fallfilmentgaser geschaltet ist.

## Claims

1. Method for the heating and degassing of additional water by means low-grade exhaust steam from a condenser in a current generation plant, **characterized in that** the additional-water stream is divided into a first, larger part-stream and a second part-stream, **in that** the second, smaller part-stream is preheated convectively and is combined with the first, larger part-stream and a total stream of additional water is formed which is heated convectively to saturation temperature, and subsequently the additional water heated to saturation temperature is degassed by means of the low-grade exhaust steam, degassing taking place in a vacuum space and the temperature of the additional water being approximately equal to the temperature of the exhaust steam, and the low-grade exhaust steam utilized for heating and degassing condensing virtually completely, simultaneously with the convective preheating of the second, smaller part-stream, and being returned to the steam circuit.

2. Apparatus arrangement for the heating and degassing of additional water by means of low-grade exhaust steam in a current generation plant, for carrying out the method according to Claim 1, **characterized in that**, for heating the additional water, the apparatus arrangement has at least two apparatuses which function on the principle of convective heat transmission, **in that**, for degassing the additional water, the apparatus arrangement has at least one packing column (23) or one falling-film degaser, and, for the virtually complete condensation of the low-grade exhaust steam used for heating and degassing the additional water, the apparatus arrangement has a condenser stripper (3).

3. Apparatus arrangement according to Claim 2, **characterized in that** the apparatuses for heating the additional water comprise a falling-film heat exchanger (11), a jacket-gap heat exchanger (22) and, for a part-stream of the additional water, a condenser stripper (3), and the apparatuses for degassing the additional water comprise a packing column (23) or a falling-film degaser and a wall falling-film degaser (30), the wall falling-film degaser (30) being connected downstream of the packing column (23) or of the falling-film degaser.

4. Apparatus arrangement according to Claim 3, **characterized in that** the falling-film heat exchanger (11) has baffles (12) counter to the direction of flow of the additional water, **in that** the packing column (23) is surrounded by the jacket-gap heat exchanger (22), and **in that** the condenser stripper (3) has baffles (5) counter to the direction of flow of the exhaust gas.

5. Apparatus arrangement according to Claim 2, **characterized in that** the apparatuses for heating the additional water comprise a condenser stripper (3), a jacket-film heat exchanger (22) and a condenser (19), in which the additional water is led through a separately arranged tube bundle (29), and the apparatuses for degassing the additional water comprise a packing column (23) or a falling-film degaser and a wall falling-film degaser (30), the wall falling-film degaser (30) being connected downstream of the packing column (23) or of the falling-film degaser.

## Revendications

1. Procédé pour chauffer et dégazer de l'eau d'addition au moyen de vapeur de décharge peu valorisable provenant du condenseur d'une installation de production de courant, **caractérisé en ce que**
l'écoulement d'eau d'addition est divisé en un premier écoulement partiel assez grand et un deuxième écoulement partiel,
**en ce que** le deuxième écoulement partiel, plus petit, est préchauffé par convection, est combiné avec le premier écoulement partiel assez grand pour former un écoulement total d'eau d'addition qui est chauffé par convection jusqu'à température de saturation,
et ensuite, l'eau d'addition chauffée à température de saturation est dégazée avec la vapeur de décharge peu valorisable,
le dégazage s'effectuant dans une chambre sous vide et la température de l'eau d'addition étant approximativement égale à la température de la vapeur de décharge,
et la vapeur de décharge peu valorisable utilisée pour le chauffage et le dégazage est en même temps condensée presque complètement par le préchauffage par convection du deuxième écoulement partiel, plus petit et est renvoyée dans le circuit de vapeur.

2. Agencement d'appareils pour le chauffage et le dégazage d'eau d'addition au moyen de vapeur de décharge peu valorisable dans une installation de production de courant, en vue de la mise en oeuvre du procédé selon la revendication 1,
**caractérisé en ce que**
l'agencement d'appareils pour le chauffage de l'eau d'addition présente au moins deux appareils qui fonctionnent suivant le principe du transfert de chaleur par convection,
**en ce que** l'agencement d'appareils pour le dégazage de l'eau d'addition présente au moins une colonne garnie (23) ou un dégazeur à film d'eau,
et **en ce qu'**il présente un condenseur-extracteur (3) pour la condensation presque complète de la vapeur de décharge peu valorisable qui a été utilisée pour chauffer et dégazer l'eau d'addition.

3. Agencement d'appareils selon la revendication 2,
**caractérisé en ce que**
les appareils de chauffage de l'eau d'addition comprennent un échangeur de chaleur (11) à film d'eau, un échangeur de chaleur (22) à interstice d'enveloppe et
un condenseur-extracteur (3) pour un écoulement partiel de l'eau d'addition,
les appareils pour le dégazage de l'eau d'addition comprenant une colonne garnie (23) ou un dégazeur à film d'eau ainsi qu'un dégazeur (30) à film d'eau sur paroi, le dégazeur (30) à film d'eau sur paroi étant raccordé en aval de la colonne garnie (23) ou du dégazeur à film d'eau.

4. Agencement d'appareils selon la revendication 3,
**caractérisé en ce que**
l'échangeur de chaleur (11) à film d'eau présente des chicanes (12) orientées en opposition à la direction d'écoulement de l'eau d'addition,
**en ce que** la colonne garnie (23) est entourée par l'échangeur de chaleur (22) à interstice d'enveloppe et
**en ce que** le condenseur-extracteur (3) présente des chicanes (5) dans une direction opposée à la direction d'écoulement de la vapeur de décharge.

5. Agencement d'appareils selon la revendication 2,
**caractérisé en ce que**
les appareils pour chauffer l'eau d'addition comprennent un condenseur-extracteur (3), un échangeur de chaleur (22) à film d'enveloppe et un condenseur (19) dans lequel l'eau d'addition est amenée par un faisceau de tubes (29) disposé séparément,
les appareils de dégazage de l'eau d'addition comprenant une colonne garnie (23) ou un dégazeur à film d'eau et un dégazeur (30) à film d'eau sur paroi, le dégazeur (30) à film d'eau sur paroi étant raccordé en aval de la colonne garnie (23) ou du dégazeur à film d'eau.
